# EUROPEAN PATENT SPECIFICATION

(11) **EP 3 144 614 B1**
(45) Date of publication and mention of the grant of the patent: **27.01.2021**
(21) Application number: 16188071.1
(22) Date of filing: 09.09.2016
(51) Int. Cl.: F25D 29/00, A01N 1/02, G06Q 10/08

(54) **A SMART BOX FOR PRODUCTS SUBJECT TO TEMPERATURE CONTROLLED CHAIN**
SMART-BOX FÜR PRODUKTE, DIE EINER TEMPERATURREGULIERTEN KETTE AUSGESETZT SIND
BOÎTIER INTELLIGENT POUR PRODUITS SOUMIS À UNE CHAÎNE À TEMPÉRATURE CONTRÔLÉE

(30) Priority: 17.09.2015 TR 201511670
(43) Date of publication of application: 22.03.2017
(73) Proprietor: Yeditepe Universitesi, 34755 Istanbul (TR)
(72) Inventor: Topaloglu, Serkan, 34755 Istanbul (TR)
(74) Representative: Dericioglu, E. Korhan

(56) References cited:
- DE-A1-102006 057 644
- GB-A- 2 369 818
- US-A1- 2011 173 023
- US-A1- 2013 106 607

## Description

### Field of the Invention

The present invention relates to a smart box, which can monitor and control particularly the products that need to be stored cold in retail sector, and which, upon transmitting the status to a central unit, allows to detect location by the help of signal power and can prevent losses.

### Background of the Invention

In food industry, keeping the products cold at markets including butcher, deli, fish, and etc. sections is of great importance. The known cold chain system has been developed for the problems that may arise during transportation of perishable and temperature sensitive products. Cold chain is a system which is used during transportation of perishable products which are required to be stored at specific temperatures. This system involves a logistical planning for protecting integrity of the shipment without interruption of the temperature thereof which is fixed by means of thermal and refrigerated packaging method throughout the supply chain. In addition to the food types; medical, biological, chemical products and laboratory samples and results are products which are also needed to be transported via this method. Cold chain is an important method for these products to reach the end point to which they will be transported healthfully at the right time.

However, in the state of the art applications; products which are taken from the butcher, deli, fish, etc. sections and which may pose health risks if they get warm, for several reasons (the customer changing her/his mind about buying the product, disliking the appearance of the product, finding the product expensive, forgetting the product at another section when organizing the shopping cart, etc.), remain in other sections in the shop before coming to the cashier's desk and before being paid for. Mostly, this situation is determined by the section attendants after the critical temperature value is exceeded and after the product stays at the said temperature value for a long time, and this in turn causes various health problems and/or waste of products.

United States patent document no. US7673464, an application known in the state of the art, discloses a method which determines temperature of the products in the sections according to their placement. A preferred temperature range is determined for this process, and placement location and temperature are determined for the products in the sections. The invention relates to systems detecting place change and temperature of the products which easily decay due to temperature. Radio frequency identification (RFID) method is used to identify products. Location change and temperature information are controlled via computer. Information can be monitored through the processor monitor. Temperature and mass sensors are placed at different regions of the storage units. There are barcodes in the products and are matched with the information coming from each radio frequency.

United States patent document no. US5487276, an application known in the state of the art, discloses a method which enables safe storage of perishable products. There is provided a base unit, which allows identification and timing of the products that should be stored in the refrigerating unit, and which is removably attached near the storage unit. When a product is brought to the storage unit, storage lifetime thereof is recorded in the base unit. The length of time an item has been stored is compared with the lifetime recorded in the base unit (barcodes) and displayed on a numeric display. Accordingly, a warning is given on the display. United States patent document no. US7405390, an application known in the state of the art, discloses a system which can detect position of identified products by using a plurality of optical beacons. The mobile body is provided with a detection unit. The detection unit identifies at least three optical beacons according to the ID codes and detects the direction according to the light emitted. It detects the position of the mobile body according to the detected light.

United States patent document no. US20110173023, an application known in the state of the art, discloses methods and systems manage the transportation of high priority medical materials, such as harvested organs from the donor to the recipient, so as to ensure a secure, continuous and monitored transport of such materials.

German patent document no. DE102006057644, an application known in the state of the art, discloses a container for the transport of objects. The container contains an interior space, at least one sensor for detecting the object.

### Problems Solved by the Invention

The objective of the present invention is to provide a smart box, which enables to ensure that the products which must be stored cold or warm in the sections stay cold or warm, and which, in the event that such type of product is located or forgotten at a place other than the section that it should be located, controls by the control mechanisms and detects location of the product by various warning mechanisms and thereby enabling to prevent health problems or waste of products.

The product which is intended to be preserved and monitored is placed into a smart box of the present invention in the concerned section. In this smart box; a heat sensor is placed to control temperature, an acceleration sensor is placed to monitor whether the box moved or not, and by the help of the beacon provided on the box, it can be monitored by means of the ID (serial number) number of the box, location can be detected and an audio and visual warning alarm is given.

### Detailed Description of the Invention

A smart box developed to fulfill the objective of the present invention is illustrated in the accompanying figure wherein:

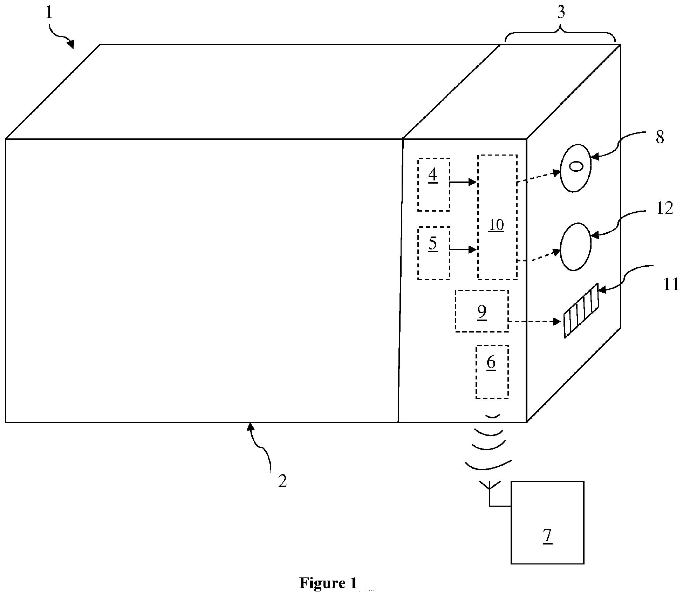

**Figure 1** is a view of the smart box.

The components in the figures are given reference numbers as follows:
**1.** Smart box
**2.** Case
**3.** Cover
**4.** Temperature sensor
**5.** Acceleration sensor
**6.** Beacon
**7.** Terminal
**8.** Buzzer
**9.** Energy source
**10.** Control unit
**11.** Battery indicator
**12.** Visual warning light

The smart box (1) of the present invention basically comprises
- a case (2) holding food products,
- a cover (3) which enables the case (2) to be closed and has a magnetic assembly,
- at least one temperature sensor (4) which is placed inside the case (2),
- at least one acceleration sensor (5) which detects whether the case (2) moved or not, and which is placed in the case (2),
- a beacon (6) which emits a predetermined identification (ID) signal,
- a control unit (10), which is adapted to receive temperature data from the temperature sensor (4), to receive movement data from the acceleration sensor (5), to compare these data with a predetermined value, and, if the received data are greater than the predetermined values, to transmit ID signal emission command to the beacon (6) and to activate the buzzer (8),
- at least one energy source (9) which supplies the electrical energy required for the operation of the sensors (4) and (5), beacon (6) and the control unit (10).

In the smart box (1) of the present invention, the temperature sensitive products, which are desired to be preserved, are placed into the case (2) upon request of the customer at the concerned section. The case (2) can be preferred to be transparent so that the product can be easily seen from outside. The case (2) is closed by a cover (3) having a magnetic assembly. The said magnetic assembly is similar to the ones which are currently being used in the special commercial boxes provided in supermarkets and various shops in order to prevent theft of particularly high value-added products. After their covers are closed, these boxes are closed by a simple mechanical latch (manually) and remain fixed by the magnet mechanism and the cover cannot be opened. When the cover is desired to be opened, this latch is released by means of a manual apparatus having a high power magnet. Thus the cover (3) enables the products in the case (2) to be stored by being protected against external factors.

The temperature sensor (4) in the case (2) measures the inner temperature of the case (2) at certain intervals continuously or for a predetermined period of time. The movement of the case (2) is measured by the acceleration sensor (5) provided in the case (2). The acceleration sensor (5) can be inside or outside of the case (2) or on the cover (3).

When the cover (3) of the case (2) is closed at the section, the control unit (10) will be energized by the energy source (9) and will start operation. With this method, the purpose is to maintain energy consumption at minimum level. When the control unit (10) receives data from the temperature sensor (4) indicating that the temperature value exceeded a predetermined value (e.g. 30°C) and data from the acceleration sensor (5) indicating that the case (2) remained stationary more than a predetermined period of time (e.g. 30 minutes), it gives the command of ID signal emission to the beacon (6). When the beacon (6), which is located inside or outside of the case (2) as preference, receives the command, it emits a predetermined ID signal (e.g. a signal including serial number) belonging to the case (2). The ID signal emitted by the beacon (6) is received by a terminal (7).

Thus the user (shop section attendant) is warned by the terminal (7) that the case (2) specified in the ID signal reached an undesired temperature and remained stationary more than a predetermined period of time. This way, it will be detected that the product remained at an undesired place such that it will cause an element of risk.

The ID numbers in the case (2) are predetermined and are defined in the handheld terminals used by the shop attendants (section attendants). These ID numbers are remotely detected by the terminals (7) (readers, mobile phones, tablets, PC, etc.) held by the section attendants, and when the ID number data is received, in addition to receiving a warning via the terminal (7), the user is also warned by the buzzer (8) provided on the case (2). The buzzer (8) is activated by the control unit (10).

The energy source (9) provided on the cover (3) supplies electrical energy to the sensors (4) and (5), beacon (6) and the control unit (10). In the different preferred embodiments of the invention, the energy source (9) can be a source such as AA battery, button battery, solar battery, but is not limited to these.

If the customer does not leave the case (2) at any place other than where it is supposed to be located and makes the purchase, it will be opened by the help of a special magnetic or mechanical assembly (preferably a handheld apparatus or a fixed apparatus having a high power magnet which will enable to open the magnetic lock mechanism of the cover) and the control unit (10) will be deenergized. According to the preference of the enterprise, the cases (2) will be returned to the units from which they are coming at specific intervals and will be able to be used again.

In different embodiments of the invention, the case (2) is produced from transparent plastic, mica, plexiglass and glass derivative materials making it convenient to see inside of the case (2). Furthermore, due to the fact that food products will be kept therein, the case (2) is preferred to be antibacterial.

In a preferred embodiment of the invention, the cover (3) is comprised of a mechanism having a mechanical or an electronic lock. The cover will be closed at the section via a mechanism such as a latch, etc. and then, it will be opened at the cashier's desk or delivery unit by means of a special handheld apparatus or fixed apparatus.

In another preferred embodiment of the invention, there is a visual warning light (12) on the case (2). In this embodiment, when the case (2) is located outside of the section where it should to be located, both a buzzer (8) is activated at specific predetermined intervals and a visual warning light (12) is turned on. The buzzer (8) and the visual warning light (12) are activated by the control unit (10). This way, the section attendants can detect location of the product before decay/spoilage thereof by means of the buzzer and the visual warning light.

In another preferred embodiment of the invention, there is a battery indicator (11) provided on the cover (3) or case (2), and thus the battery level can be monitored visually.

In another preferred embodiment of the invention, a wireless chargeable energy source (9) is preferred.

In a preferred embodiment of the invention, Bluetooth technology is used for the wireless communication between the beacon (6) and the terminals.

In a preferred embodiment of the invention, the control unit (10) is adapted to send a command to the beacon and to activate the buzzer (8) if the temperature data received from the temperature sensor (4) is below a predetermined value and the data received from the acceleration sensor (5) is greater than a predetermined value. This embodiment is used for products that are required to be kept warm.

## Claims

1. A smart box (1) suitable for holding food products and **comprising**
- a case (2) holding food products,
- a cover (3) which enables the case (2) to be closed and has a magnetic lock assembly,
- at least one temperature sensor (4) which is placed inside the case (2),
- at least one acceleration sensor (5) which detects whether the case (2) moved or not, and which is placed in the case (2),
- a beacon (6) which emits a predetermined identification (ID) signal, and **characterized by**
- a buzzer (8) and a warning light (12),
- a control unit (10), which is adapted to receive temperature data from the temperature sensor (4), to receive movement data from the acceleration sensor (5), to compare these data with a predetermined value, and, if the received data are greater than the predetermined values, to transmit identification (ID) signal emission command to the beacon (6) and to activate the buzzer (8), and
- at least one energy source (9) which supplies the electrical energy required for the operation of the sensors (4) and (5), beacon (6) and wherein
- the control unit (10) is adapted to send a command to the beacon (6) and to activate the buzzer (8) and visual warning light (12) if the temperature data received from the temperature sensor (4) is below a predetermined value and the data received from the acceleration sensor (5) is greater than a predetermined value

2. A smart box (1) according to Claim 1, **characterized by** a visual warning light (12) which is activated by the control unit (10).

3. A smart box (1) according to Claim 1, **characterized by** the cover (3) which is comprised of a mechanism having a mechanical or an electronic lock.

4. A smart box (1) according to Claim 1, **characterized by** a wireless chargeable energy source (9).

5. A smart box (1) according to Claim 1, **characterized by** a battery indicator (11) which is located on the cover (3) or the case (2).

6. A smart box (1) according to Claim 1, **characterized by** the case (2) which is made of a transparent material.

7. A smart box (1) according to Claim 1, **characterized by** the cover (3) which is made of plastic material.

8. A smart box (1) according to Claim 1, **characterized by** the case (2) which is made of an antibacterial material.

9. A smart box (1) according to Claim 1, **characterized by** the cover (3) which is made of an antibacterial material.

## Patentansprüche

1. Smartbox (1), die zur Aufnahme von Lebensmitteln geeignet ist und Folgendes **umfasst**
- ein Gehäuse (2) zur Aufbewahrung von Lebensmitteln,
- einen Deckel (3), der das Verschließen des Gehäuses (2) ermöglicht und eine magnetische Verriegelungseinrichtung aufweist,
- mindestens einen Temperatursensor (4), der im Inneren des Gehäuses (2) angeordnet ist,
- mindestens einen Beschleunigungssensor (5), der detektiert, ob das Gehäuse (2) bewegt wurde oder nicht, und der im Gehäuse (2) angeordnet ist,
- eine Kennleuchte (6), die ein vorgegebenes Identifikationssignal (ID) aussendet,
und **gekennzeichnet durch**
- einen Summer (8) und eine Warnleuchte (12),
- eine Steuereinheit (10), die dazu ausgebildet ist, Temperaturdaten von dem Temperatursensor (4) zu empfangen, Bewegungsdaten von dem Beschleunigungssensor (5) zu empfangen, diese Daten mit einem vorbestimmten Wert zu vergleichen und, wenn die empfangenen Daten größer als die vorbestimmten Werte sind, einen Befehl zum Senden eines Identifizierungssignals (ID) an die Bake (6) zu senden und den Summer (8) zu aktivieren, und
- mindestens eine Energiequelle (9), die die für den Betrieb der Sensoren (4) und (5), Bake (6) erforderliche elektrische Energie liefert und wobei
- die Steuereinheit (10) ausgebildet ist, einen Befehl an die Bake (6) zu senden und den Summer (8) und die optische Warnleuchte (12) zu aktivieren, wenn die vom Temperatursensor (4) empfangenen Temperaturdaten unter einem vorbestimmten Wert liegen und die vom Beschleunigungssensor (5) empfangenen Daten größer als ein vorbestimmter Wert sind.

2. Smartbox (1) nach Anspruch 1, **gekennzeichnet durch** eine optische Warnleuchte (12), die durch die Steuereinheit (10) aktiviert wird.

3. Intelligente Box (1) nach Anspruch 1, **gekennzeichnet durch** den Deckel (3), der aus einem Mechanismus mit einer mechanischen oder einer elektronischen Verriegelung besteht.

4. Smartbox (1) nach Anspruch 1, **gekennzeichnet durch** eine drahtlos aufladbare Energiequelle (9).

5. Smartbox (1) nach Anspruch 1, **gekennzeichnet durch** eine Batterieanzeige (11), die auf dem Deckel (3) oder dem Gehäuse (2) angeordnet ist.

6. Smartbox (1) nach Anspruch 1, **gekennzeichnet durch** das Gehäuse (2), das aus einem transparenten Material hergestellt ist.

7. Smartbox (1) nach Anspruch 1, **gekennzeichnet durch** dem Deckel (3), der aus einem plastischen Material hergestellt ist.

8. Smartbox (1) nach Anspruch 1, **gekennzeichnet durch** das Gehäuse (2), das aus einem antibakteriellen Material hergestellt ist.

9. Smartbox (1) nach Anspruch 1, **gekennzeichnet durch** den Deckel (3), der aus einem antibakteriellen Material hergestellt ist.

## Revendications

1. Boîte intelligente (1) appropriée pour contenir des produits alimentaires et **comprenant**
- une caisse (2) contenant des produits alimentaires,
- un couvercle (3) qui permet de fermer la caisse (2) et qui est pourvu d'un ensemble de verrouillage magnétique,
- au moins un capteur de température (4) qui est placé à l'intérieur de la caisse (2),
- au moins un capteur d'accélération (5) qui détecte si la caisse (2) a bougé ou non, et qui est placé dans la caisse (2),
- une balise (6) qui émet un signal d'identification (ID) prédéterminé, et **caractérisée par**
- un buzzer (8) et un voyant d'avertissement (12),
- une unité de commande (10), qui est adaptée pour recevoir des données de température du capteur de température (4), pour recevoir des données de mouvement du capteur d'accélération (5), pour comparer ces données avec une valeur prédéterminée, et, si les données reçues sont supérieures aux valeurs prédéterminées, pour transmettre la commande d'émission du signal d'identification (ID) à la balise (6) et pour activer le buzzer (8), et
- au moins une source d'énergie (9) qui fournit l'énergie électrique requise pour le fonctionnement des capteurs (4) et (5), de la balise (6) et dans laquelle
- l'unité de commande (10) est adaptée pour envoyer une commande à la balise (6) et pour activer le buzzer (8) et le voyant d'avertissement visuel (12) si les données de température reçues du capteur de température (4) sont inférieures à une valeur prédéterminée et les données reçues du capteur d'accélération (5) sont supérieures à une valeur prédéterminée.

2. Boîte intelligente (1) selon la revendication 1, **caractérisée par** un voyant d'avertissement visuel (12) qui est activé par l'unité de commande (10).

3. Boîte intelligente (1) selon la revendication 1, **caractérisée par** le couvercle (3) qui est constitué d'un mécanisme comportant un verrouillage mécanique ou électronique.

4. Boîte intelligente (1) selon la revendication 1, **caractérisée par** une source d'énergie rechargeable sans fil (9).

5. Boîte intelligente (1) selon la revendication 1, **caractérisée par** un indicateur de batterie (11) qui se trouve sur le couvercle (3) ou sur la caisse (2).

6. Boîte intelligente (1) selon la revendication 1, **caractérisée par** la caisse (2) qui est faite d'un matériau transparent.

7. Boîte intelligente (1) selon la revendication 1, **caractérisée par** le couvercle (3) qui est en matière plastique.

8. Boîte intelligente (1) selon la revendication 1, **caractérisée par** la caisse (2) qui est faite d'un matériau antibactérien.

9. Boîte intelligente (1) selon la revendication 1, **caractérisée par** le couvercle (3) qui est fait d'un matériau antibactérien.
